(19) Europäisches Patentamt

European Patent Office

Office européen des brevets

(11) **EP 0 978 030 B1**

(12) **EUROPEAN PATENT SPECIFICATION**

(45) Date of publication and mention
of the grant of the patent:
**27.03.2002 Bulletin 2002/13**

(51) Int Cl.[7]: **G06F 7/52**, H04M 9/08

(21) Application number: **97936536.8**

(22) Date of filing: **08.08.1997**

(86) International application number:
**PCT/CA97/00580**

(87) International publication number:
**WO 98/07102 (19.02.1998 Gazette 1998/07)**

(54) **ELIMINATING DIVISION IN NLMS ALGORITHM**

BESEITIGUNG VON DIVISIONSOPERATIONEN IN NLMS ALGORITHMUS

ELIMINATION DE LA DIVISION DANS UN ALGORITHME A MOYENNE QUADRATIQUE MINIMALE NORMALISEE

(84) Designated Contracting States:
**DE FR GB**

(30) Priority: **08.08.1996 US 694128**

(43) Date of publication of application:
**09.02.2000 Bulletin 2000/06**

(73) Proprietor: **Nortel Networks Limited
Montreal, Quebec H2Y 3Y4 (CA)**

(72) Inventor: **DING, Heping
Kanata, Ontario K2L 1N6 (CA)**

(74) Representative: **Bewley, Ewan Stuart et al
Nortel Networks
Intellectual Property Law Group
London Road
Harlow, Essex CM17 9NA (GB)**

(56) References cited:
**EP-A- 0 421 962**

- **ERCEGOVAC M D ET AL: "A DIVISION ALGORITHM WITH PREDICTION OF QUOTIENT DIGITA" PROCEEDINGS OF THE SYMPOSIUM ON COMPUTER ARITHMETIC, URBANA, JUNE 4 - 6, 1985, no. SYMP. 7, 4 June 1985, HWANG KAI, pages 51-56, XP002000069**
- **KENSAKU FUJII ET AL: "AN ANALYSIS OF THE CONVERGENCE PROPERTY OF THE NORMALIZED LMS ALGORITHM FOR ECHO CANCELLERS" FUJITSU-SCIENTIFIC AND TECHNICAL JOURNAL, vol. 29, no. 4, 21 December 1993, pages 390-400, XP000439113**

**Description**

This invention relates to digital signal processors (DSPs) and to an iterative method to eliminate the division operation in the NLMS algorithm implemented on the DSP chip.

There are many applications in which a digital signal processor is required to perform a calculation involving a division operation. One such application is the NLMS algorithm. NLMS (normalized least mean square) represents an adaptation algorithm widely used in the telecommunications industry and in signal processing in general. For example, the algorithm is used in acoustic subsystems for telephone terminals operable in handsfee mode. In this implementation the algorithm is used to perform echo cancellation. It can also be used to do noise cancellation, equalization, system identification and so on. These applications require continual sampling of signals and to make use of the sampled data to determine appropriate changes required by the system's digital signal processor to optimise the system performance.

Kensaku Fujii et al: "An Analysis of the Convergence Property of the Normalized LMS Algorithm for Echo Cancellers", Fujitsu-Scientific and Technical Journal, vol. 29, no. 4, 21 December 1993, pages 390-400, describes a new IIR filter expression of the NLMS algorithm used to analyze and improve the estimation process, then derives an equation for evaluating the convergence property by making use of the expression. The expression disclosed that the adaptive filter coefficients are estimated as the output of the IIR filter and that the estimation error comprises output fluctuations caused by disturbances and by the difference between the input and the output. The convergence property formulated by using the disclosed acquisition has provided a role which the convergence rate is directly proportional to {K(2-K)}/ $l$ where $l$ is the number of adaptive filter taps and K is a step gain.

Ercegovac M D et al: "A Division Algorithm with Prediction of Quotient Digits" Proceedings of the Symposium on Computer Arithmetic, Urbana, June 4-6, 1985, no. SYMP. 7, 4 June 1985, Hwang Kai, pages 51-56 indicates that a division algorithm with a simple selection of quotient digits including prediction is possible if the divisor is restricted to a suitable range. The conditions that the divisor must satisfy to have the quotient digit $q_{l+1}$ predicted while computing $R_{l+1}$ are determined. Some implementation considerations are also given.

In order to carry out the implementation of the NLMS algorithm, the step size used in each sampling interval must be calculated by the digital signal processor. In the NLMS adaptation algorithm the step size, denoted by $\mu(n)$ at time $n$ is given by the equation:

$$\mu(n) = \frac{\beta}{< \chi^2(n) >} \qquad \text{(Equation 1)}$$

where $\beta$ is a scaling constant and $<\chi^2(n)>$ is a weighted time average of a certain number of past samples of $\chi^2$ (k), where $k=n, n-1, n-2, \ldots.$, i.e., an estimate of the energy in input samples $x(n)$ up to time $n$.

As apparent from Equation 1, a division step is required in order to calculate $\mu(n)$ in every sampling interval. Most digital signal processors take many more processing steps to perform a division operation than a multiplication. This means that more processing time is required. For example, it takes 37 instruction cycles for a Motorola DSP56100 to perform a routine division operation. The same DSP can perform a multiplication operation using only one instruction cycle.

The NLMS algorithm is given as one example of an operation involving an equation needing division operations. It will be obvious that the benefits derived from eliminating division from the processing cycles extend to other calculations where the quotient changes gradually over time.

It is an object of the present invention to provide in a digital signal processor a method of processing an equation needing a division without performing an actual division operation.

It is a further object of the invention to provide in a digital signal processor a method of calculating an NLMS adaptation algorithm to eliminate the real division operation.

It is a further object of the invention to implement the algorithm using multiplication and comparison steps.

Therefore in accordance with a first aspect of the present invention there is provided in a digital signal processor a divisionless method of obtaining a quotient from an equation having a numerator and denominator comprising the steps of: giving the quotient an estimated value; multiplying the estimated quotient and the denominator; comparing the product with the numerator; and adjusting the estimated quotient so that the product of the estimated quotient and the denominator substantially equals the numerator.

In accordance with a preferred embodiment of the invention the equation is an NLMS adaptation algorithm.

In accordance with a further aspect of the invention there is provided in an acoustic system of a telephone terminal having a digital signal processor, a divisionless method of calculating an NLMS adaptation algorithm having the form:

$$Q = \frac{N}{D}$$

where

$Q =$ quotient,
$N =$ numerator, and
$D =$ denominator $\neq 0$

comprising the steps of:

(a) choosing $Q'$, an estimated value of $Q$,
(b) multiplying $Q'$ and $D$ to get a product $Q' \cdot D$,
(c) comparing $Q' \cdot D$ and $N$, and
(d) adjusting $Q'$ as required so that $Q' \cdot D$ is substantially equal to $N$.

Brief Description of the Drawings

The invention will now be described in greater detail with reference to the attached drawings wherein:

FIGURE 1 is a flow diagram of a divisionless calculation when the denominator as shown in Equation 1 is available; and
FIGURE 2 is a flow diagram of a divisionless calculation when the denominator as shown in Equation 1 is not available.

In general terms the invention relates to the processing, by a digital signal processor, of an equation such as:

$$Q = \frac{N}{D} \quad\quad\quad \text{(Equation 2)}$$

where:

$Q =$ quotient
$N =$ numerator, and
$D =$ denominator $\neq 0$

The process involves a multiplication and comparison technique. Thus, the first step is to provide a first estimate of the quotient which will be known as $Q'$. Then $Q'$ can be multiplied with $D$ and the product compared with $N$. If $N$ is greater than $Q' \cdot D$ and $D$ is positive, then $Q'$ must be increased to new estimate of the quotient. Conversely, if $N$ is less than $Q \cdot D$ and $D$ is positive, then $Q'$ must be decreased to a new estimate of the quotient.

If $D$ is negative, then the adjustments made to $Q'$ must be in the opposite directions from those described above.

This process can be expressed in mathematical form as follows. The estimate for the quotient at time $n$ is denoted by $Q'(n)$. The comparison result

$$\Delta(n) = N - Q'(n) \cdot D \quad\quad\quad \text{(Equation 3)}$$

is used to derive the estimate for the quotient at time $n$+1 by

$$Q'(n + 1) = Q'(n) + sgn(D) \cdot G \cdot \Delta(n) \quad\quad\quad \text{(Equation 4)}$$

where $sgn(D)$ is the sign of $D$ and is defined as

$$sgn(D) = \begin{cases} +1 & if \ D > 0 \\ -1 & if \ D < 0 \end{cases} \qquad \text{(Equation 5)}$$

and $G$ is a positive constant.

The process is continued in every sampling interval. Thus, as long as $N$ and $D$ vary relatively slowly over time, the actual value of the estimated quotient will become such that the product of the estimated quotient and the denominator is substantially equal to the numerator. This means the estimated quotient has become a good estimate for the true quotient.

This version of the processing steps can now be applied to the NLMS adaptation algorithm since here both numerator and denominator vary slowly over time. Also, because the denominator is always positive in the application with the NLMS adaptation algorithm, there is no need to incorporate its sign as requested by (Equation 4). Being a first-order closed loop feedback system, the invention estimates the quotient in Equation 1 iteratively.

According to Equation 1, a certain $\mu'(n)$, at sampling interval $n$, is a good approximation to $\mu(n)$ if:

$$\mu'(n) \cdot <x^2(n)> = \beta \qquad \text{(Equation 6)}$$

Furthermore, one can use a multiplication and comparison, as in Equation 3, to tell how $\mu'(n)$ deviates from the target $\mu(n)$ and then to modify $\mu'(n)$ accordingly.

The invention can be implemented in two different situations, i.e., where the denominator, $<x^2(n)>$, is readily available and where it is not.

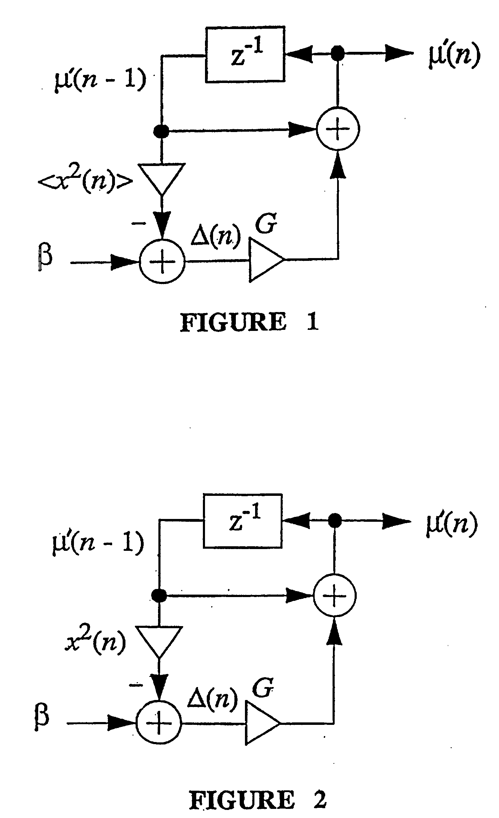

When $<x^2(n)>$ is readily available, the average of certain number of past samples of $x^2(k)$, ($k = n, n - 1, n - 2,...$), has already been calculated for some other purposes, this $<x^2(n)>$ can be made use of directly. The flow diagram in FIGURE 1 shows how the concept of the present invention is implemented in this case.

The corresponding analytical form is given below:

$$\Delta(n) = \beta - \mu'(n - 1) \cdot < x^2(n)> \qquad \text{(Equation 7)}$$

$$\mu'(n) = \mu'(n - 1) + G \cdot \Delta(n) \qquad \text{(Equation 8)}$$

In the above:

$\mu'(n - 1)$ is the previous estimate of the step size, i.e., the one used by the NLMS algorithm in the last sampling interval, indexed by $n - 1$ ;

$\mu'(n)$ is the current estimate of the step size, which is to be used by the NLMS algorithm in the current sampling interval, i.e., sampling interval $n$; and

$G$ is a positive factor that controls the rate of change of $\mu'(n)$.

By looking at Equation 6, one can tell that $\Delta(n)$ given in Equation 7 is a scaled version of the negative deviation of $\mu'(n-1)$ from the target. In Equation 8, this negative deviation is scaled and used to modify $\mu'(n - 1)$ to form a new estimate $\mu'(n)$, which is closer to the target.

When $<x^2(n)>$ is not needed for any other purposes in the rest of the DSP system so that it is not readily available, it is possible to calculate it and then use the method set out above to derive $\mu'(n)$. There is, however, a more efficient way of deriving $\mu'(n)$; $<x^2(n)>$ does not have to be explicitly calculated at all.

This implementation scheme is shown in FIGURE 2, and the corresponding analytical form is given in Equation 9 and Equation 10.

$$\Delta(n) = \beta - \mu'(n - 1) \cdot x^2(n) \qquad \text{(Equation 9)}$$

$$\mu'(n) = \mu'(n - 1) + G \cdot \Delta(n) \qquad \text{(Equation 10)}$$

It can be seen that this implementation scheme differs from that previously described in that $< x^2(n) >$ has been replaced by $x^2(n)$, i.e., a single sample rather than an averaged version of it is used. Since as a single sample, $x^2(n)$ fluctuates much more than $<x^2(n)>$ does over time, $G$ here has to be much smaller than in FIGURE 1 and in Equation 8 in order to reduce the fluctuation of $\mu'(n)$ over time.

By implementing the invention this way, it is possible to derive $<x^2(n)>$ implicitly. The fact that $G$ is much smaller does not reduce the implementation's response time. All that has been done is to move the response time from the calculation of $<x^2(n)>$ co Equation 10.

The method according to this invention has been implemented in acoustic echo cancellers on a Motorola DSP56156 digital signal processor platform. In this application the implementation scheme described above, for the case where $<x^2(n)>$ is available, was used. $G$ was chosen as 4.

As previously indicated, it takes 37 instruction cycles to perform a "Signed 16 Bit Result Divide", a division routine that is suitable for solving Equation 1 (see Motorola, DSP56100 Digital Signal Processor Family Manual, DSP56100FM/AD, 1993, p. B-32). The assembly code listed in TABLE 1 shows that only 10 instruction cycles are needed to solve the equation using the process according to the invention.

TABLE 1

| ; Update | step size mu, | converging to $\beta/<x^2(n)>$ | I-cycles |
|---|---|---|---|
| move | x:G_AVx,y0 ; | y0 <--$G \cdot <x^2(n)>$ | 2 |
| move | x:mu,x0 ; | x0 <--$\mu'(n-1)$ | 2 |
| move | #G*beta,a ; | al <--$G \cdot \beta$ | 2 |
| macr | -y0,x0,a ; | al <-- $G \cdot \Delta(n)$ <br> = $G \cdot [\beta - \mu'(n-1) \cdot <x^2(n)>]$ | 1 |
| add | x0,a ; | al <-- $\mu'(n) = \mu'(n-1) + G \cdot \Delta(n)$ | 1 |
| move | a,x:mu ; | Save $\mu'(n)$ | 2 |
| | | TOTAL | 10 |

It will be apparent to one skilled in the art that there can be even more savings if $<x^2(n)>$ is not needed anywhere else in the system so that the second implementation scheme is used. This is because then there is no need for calculating $<x^2(n)>$, while with the conventional NLMS algorithm this quantity has to be calculated anyway since Equation 1 needs it.

In summary, the present invention represents a process that eliminates the real-time critical division operation involved in the widely used NLMS adaptation algorithm. The real-time saving is about 73% compared with division operations, if the first implementation scheme is used, and even more if the second scheme is used.

Although a particular embodiment has been described and illustrated it will be apparent to one skilled in the art that variations and alternatives to the described process are possible. It is to be understood that such variations and alternatives will not depart from the scope of the invention as defined by the appended claims.

**Claims**

1. A method of performing an NLMS(normalized least mean square) adaptation algorithm in an acoustic circuit of a telephone terminal, wherein a signal step size calculated by a digital signal processor in each sampling interval is denoted by $\mu(n)$ at a time n and is given by the relationship:

$$\mu(n) = \frac{\beta}{<x^2(n)>}$$

where β is a scaling constant and $<x^2(n)>$ is a weighted time average of a certain number of past samples of $x^2$ $(k)$, where $k=n$, $n$-1, $n$-2, ....., representing an estimate of the energy in input samples up to time $n$, the method comprising the steps of:

> (a) at a certain sampling interval $n$, determining the product of $\mu'(n) \cdot <x^2(n)>$ wherein $\mu'(n)$ is the current estimate of the step size which is to be used by the NLMS algorithm in the current sampling interval $n$;
> (b) comparing the result obtained in (a) with the value of β and determining the deviation therefrom; and
> (c) modifying the value of $\mu'(n)$, by an amount corresponding to at least a portion of said deviation so that the value of $\mu'(n) \cdot <x^2(n)>$ more closely approximates the value of β.

**2.** A method as defined in claim 1 wherein the divisor of the relationship is a single sample $x^2(n)$.

**3.** A method as defined in claims 1 or 2 wherein the value of the estimate of the step size $\mu'(n)$ corresponds to

$$\mu'(n) = \mu'(n\text{-}1) + G \cdot \Delta(n)$$

wherein $\mu'(n\text{-}1)$ is the previous estimate of the step size used by the NLMS algorithm in the previous sampling interval, G is a positive gain factor that controls the rate of change of $\mu'(n)$, and $\Delta(n)$ is a scaled version of the deviation of $\mu'(n\text{-}1)$ and corresponds to $\Delta(n) = \beta - \mu'(n\text{-}1) \cdot <x^2(n)>$.

**Patentansprüche**

**1.** Verfahren zur Ausführung eines NLMS- (normalisierte kleinste mittlere Fehlerquadrate-) Anpassungsalgorithmus in einer akustischen Schaltung eines Telefon-Endgerätes, bei dem eine von einem digitalen Signalprozessor in jedem Abtastintervall berechnete Signalschrittgröße mit μ(n) zu einem Zeitpunkt n bezeichnet und durch die Beziehung:

$$\mu(n) = \frac{\beta}{<x^2(n)>}$$

gegeben ist, worin β eine Skalierungskonstante und $<x^2(n)>$ ein bewerteter zeitlicher Mittelwert einer bestimmten Anzahl von vergangenen Abtastproben $x^2(k)$ ist, worin k = n, n -1, n -2, ... ist und einen Schätzwert der Energie in Eingangs-Abtastproben bis zum Zeitpunkt n darstellt, wobei das Verfahren die folgenden Schritte umfaßt:

> (a) zu einem bestimmten Abtastintervall n, Bestimmen des Produktes von $\mu'(n) \cdot <x^2(n)>$, worin $\mu'(n)$ der derzeitige Schätzwert der Stufengröße ist, die von dem NLMS-Algorithmus in dem derzeitigen Abtastintervall n zu verwenden ist,
>
> (b) Vergleichen des in (a) erzielten Ergebnisses mit dem Wert von β und Bestimmen der Abweichung hiervon; und
>
> (c) Modifizieren des Wertes von $\mu'(n)$ um einen Betrag, der zumindest einem Teil dieser Abweichung entspricht, so daß der Wert von $\mu'(n) \cdot <x^2(n)>$, stärker dem Wert von β angenähert ist.

**2.** Verfahren nach Anspruch 1, bei dem der Nenner der Beziehung eine einzige Abtastprobe $x^2(n)$ ist.

**3.** Verfahren nach Anspruch 1 oder 2, bei dem der Wert des Schätzwertes der Schrittgröße $\mu'(n)$

$$\mu'(n) = \mu'(n\text{-}1) + G \cdot \Delta(n)$$

entspricht, worin $\mu'(n\text{-}1)$ der vorhergehende Schätzwert der Schrittgröße ist, die von dem NLMS-Algorithmus in dem vorhergehenden Abtastintervall verwendet wurde, G ein positiver Verstärkungsfaktor ist, der die Änderungsgeschwindigkeit von $\mu'(n)$ kontrolliert, und $\Delta(n)$ eine skalierte Version der Abweichung von $\mu'(n\text{-}1)$ ist und $\Delta(n) = \beta - \mu'(n\text{-}1) \cdot <x^2(n)>$ entspricht.

**Revendications**

1. Procédé pour effectuer un algorithme d'adaptation NLMS (moindres carrés normalisés) dans un circuit acoustique d'un terminal téléphonique, dans lequel une grandeur de pas de signal calculée par un processeur de signal numérique dans chaque intervalle d'échantillonnage est désignée par $\mu(n)$ à un instant n et est donnée par la relation suivante :

$$\mu(n) = \frac{\beta}{\langle x^2(n) \rangle}$$

où $\beta$ est une constante de mise à l'échelle et $<x^2(n)>$ est une moyenne temporelle pondérée d'un certain nombre d'échantillons passés de $x^2(k)$, où k = n, n - 1, n - 2, ..., représentant une estimation de l'énergie dans des échantillons d'entrée jusqu'à l'instant n, le procédé comportant les étapes consistant à :

(a) à un certain intervalle d'échantillonnage n, déterminer le produit $\mu'(n) \cdot <x^2(n)>$ où $\mu'(n)$ est l'estimation courante de la grandeur de pas qui est à utiliser par l'algorithme NLMS dans l'intervalle d'échantillonnage courant n,
(b) comparer le résultat obtenu à l'étape (a) avec la valeur de $\beta$ et déterminer l'écart par rapport à celui-ci, et
(c) modifier la valeur de $\mu'(n)$, d'une quantité correspondant à au moins une partie dudit écart de sorte que la valeur de $\mu'(n) \cdot <x^2(n)>$ s'approche de manière plus étroite de la valeur de $\beta$.

2. Procédé selon la revendication 1, dans lequel le diviseur de la relation est un échantillon unique $x^2(n)$.

3. Procédé selon la revendication 1 ou 2, dans lequel la valeur de l'estimation de la grandeur de pas $\mu'(n)$ correspond à

$$\mu'(n) = \mu'(n - 1) + G \cdot \Delta(n)$$

où $\mu'(n - 1)$ est l'estimation précédente de la grandeur de pas utilisée par l'algorithme NLMS dans l'intervalle d'échantillonnage précédent, G est un facteur de gain positif qui commande la vitesse de changement de $\mu'(n)$, et $\Delta(n)$ est une version mise à l'échelle de l'écart de $\mu'(n - 1)$ et correspond à $\Delta(n) = \beta - \mu'(n - 1) \cdot <x^2(n)>$.

FIGURE 1

FIGURE 2